# EUROPÄISCHE PATENTSCHRIFT

(11) **EP 2 132 975 B1**
(45) Veröffentlichungstag und Bekanntmachung des Hinweises auf die Patenterteilung: **27.06.2012**
(21) Anmeldenummer: 09162322.3
(22) Anmeldetag: 09.06.2009
(51) Int. Cl.: B60K 17/28, A01D 41/14, A01D 69/03

(54) **Antriebssystem für eine Erntemaschine**
Drive system for an agricultural harvester
Système d'entraînement pour une moissonneuse

(30) Priorität: 11.06.2008 DE 102008002344
(43) Veröffentlichungstag der Anmeldung: 16.12.2009
(73) Patentinhaber: Deere & Company, Moline, IL 61265-8098 (US)
(72) Erfinder: Bohrer, Stefan, 66606 St. Wendel (DE); Weis, Helmut, 66506 Maßweiler (DE)
(74) Vertreter: Holst, Sönke

(56) Entgegenhaltungen:
- EP-A- 1 400 162
- EP-A- 1 679 218
- EP-A- 1 683 674
- WO-A-02/056672
- DE-A1- 19 606 388

## Beschreibung

Die Erfindung betrifft eine Erntemaschine nach dem Oberbegriff des Anspruchs 1.

### Stand der Technik

Bei landwirtschaftlichen Erntemaschinen ist es gebräuchlich, Komponenten durch Hydromotore anzutreiben. Dazu treibt ein Verbrennungsmotor eine Hydropumpe mechanisch an, die wiederum hydraulikfluidleitend mit dem Hydromotor verbunden ist. Wird die Hydropumpe und/oder der Hydromotor mit einem verstellbaren Schluckvolumen versehen, kann die Drehzahl der vom Hydromotor angetriebenen Komponenten der Erntemaschine variierbar gestaltet werden.

Die WO 02/056672 A beschreibt eine derartige Erntemaschine in Form eines Feldhäckslers, bei dem die Vorpresswalzen durch eine verstellbare Hydropumpe und einen Hydromotor angetrieben werden. Der Erntevorsatz wird durch eine weitere, verstellbare Hydropumpe und einen Hydromotor angetrieben. Beide erwähnten, verstellbaren Hydropumpen stehen permanent mit einem Verbrennungsmotor in Antriebsverbindung. Weiterhin ist ein dritter Hydromotor mit dem Antriebsstrang der Häckseltrommel verbunden, der über einen spannbaren Riementrieb angetrieben wird. Die Eingangsseite des spannbaren Riementriebs und ein Gebläse sind wiederum über eine abschaltbare Kupplung mit dem Verbrennungsmotor verbindbar. Im normalen Erntebetrieb dient der dritte Hydromotor als Pumpe, die einen Hydromotor beaufschlagt, welcher eine Körnerprozessorwalze antreibt. Der dritte Hydromotor kann, wenn der spannbare Riemenantrieb zwischen der Häckseltrommel und der Kupplung abgeschaltet ist, zum Reversieren der Häckseltrommel eingesetzt werden. Da die Kupplung und der spannbare Riementrieb bei einer Straßenfahrt geöffnet sind, da dann weder die Häckseltrommel noch das Gebläse anzutreiben sind, ist dann auch der dritte Hydromotor abgeschaltet. Die beiden verstellbaren Hydropumpen, die zum Antrieb der Hydromotoren für den Erntevorsatz und die Vorpresswalzen dienen, werden allerdings auch bei der Straßenfahrt angetrieben. Obwohl die verstellbaren Hydropumpen sich dann im Leerlauf befinden, ist bei dieser bekannten Anordnung als nachteilig anzusehen, dass dennoch einige Antriebsleistung, die in der Größenordnung von 10 kW liegen kann, für ihren Antrieb benötigt wird.

Die US 4 843 767 A beschreibt einen Feldhäcksler, bei dem die Häckseltrommel zum Schleifen durch einen Reversiermotor in gegenüber dem Erntebetrieb umgekehrter Richtung antreibbar ist. Dazu wird der die Häckseltrommel mit dem Verbrennungsmotor verbindende, mechanische Antriebsstrang durch Öffnung einer Kupplung aufgetrennt und der Reversiermotor durch Ventile mit einer vom Verbrennungsmotor permanent angetriebenen Pumpe verbunden. Auch hier wird demnach die Pumpe permanent angetrieben, auch wenn ihre Leistung nicht benötigt wird.

In der DE 196 06 388 A1 wird ein Feldhäcksler beschrieben gemäß dem einleitenden Teil des Anspruchs 1, dessen Verbrennungsmotor über einen ersten Riemenantrieb eine Vorgelegewelle antreibt, die wiederum zum Antrieb einer Hydropumpe dient. Die Hydropumpe versorgt einen eine Zuführeinrichtung antreibenden Hydromotor. Weiterhin treibt die Vorgelegewelle eine Häckseltrommel an. Der erste Riemenantrieb ist mit einer als Hauptkupplung fungierenden Riemenkupplung ausgestattet. Bei ausgeschalteter Hauptkupplung wird somit die Hydropumpe nicht angetrieben. Die Häckseltrommel ist in nicht näher beschriebener Weise rückwärts antreibbar, um die Häckselmesser nachzuschleifen.

### Aufgabe der Erfindung

Die der Erfindung zu Grunde liegende Aufgabe wird darin gesehen, ein Antriebssystem für eine Erntemaschine bereitzustellen, bei dem ein Erntevorsatz und/oder ein Erntevorsatz beim Erntebetrieb hydraulisch angetrieben werden, und das sich durch einen verminderten Leistungsbedarf beim Straßenfahrbetrieb auszeichnet.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine selbstfahrende, angebaute oder gezogene Erntemaschine in Form eines Feldhäckslers umfasst einen Verbrennungsmotor, der über einen Antriebsstrang mit einer Hydropumpe verbindbar ist. Die mit festem oder verstellbarem Schluckvolumen versehene Hydropumpe ist hydraulikfluidleitend mit einem Hydromotor verbunden, der ein festes oder verstellbares Schluckvolumen aufweist. Der Hydromotor treibt einen Einzugsförderer und/oder einen Erntevorsatz der Erntemaschine an. Eine Steuerung dient zur Auswahl zwischen einem ersten Betriebsmodus und einem zweiten Betriebsmodus. Der erste Betriebsmodus ist ein Erntemodus, während der zweite Betriebsmodus vorzugsweise ein Straßenfahrmodus sein kann. Im ersten Betriebsmodus ist der Antriebsstrang zwischen dem Verbrennungsmotor und der Hydropumpe mittels eines fremdkraftbetätigten, mit der Steuerung verbundenen Aktors geschlossen und der Hydromotor wird durch die Hydropumpe hydraulisch angetrieben. Im zweiten Betriebsmodus ist der Antriebsstrang zwischen dem Verbrennungsmotor und der Hydropumpe mittels des Aktors aufgetrennt, so dass die Hydropumpe nicht angetrieben wird und auch der Hydromotor steht.

In den Antriebsstrang zwischen dem Verbrennungsmotor und der Hydropumpe ist eine Kupplung eingefügt. Dabei kann es sich um eine Kupplung mit in Eingriff bringenden Scheiben handeln, die elektromagnetisch oder hydraulisch oder pneumatisch gegeneinander gedrückt oder voneinander getrennt werden, oder um eine Riemenkupplung mit einem hydraulisch spannbaren Riemen. Es sind auch andere Kupplungsformen verwendbar, wie ein durch eine Schaltmuffe mit einer Welle in Antriebsverbindung bringbares Zahnrad.

Die erwähnte Kupplung dient zusätzlich zum Trennen und Verbinden des Antriebsstranges einer Erntegutbearbeitungseinrichtung, bei der es sich um eine Häckseleinrichtung eines Feldhäckslers handelt, da die Erntegutbearbeitungseinrichtung - genau wie die Hydropumpe - im ersten Betriebsmodus anzutreiben und im zweiten Betriebsmodus nicht anzutreiben ist. Die Eingangsseite der Kupplung wird mit dem Verbrennungsmotor verbunden und ihre Ausgangsseite sowohl mit dem Hydromotor als auch mit der Erntegutbearbeitungseinrichtung.

Es ist auch ein dritter Betriebsmodus vorgesehen, bei dem es sich um einen Schleifmodus handelt, in dem die Häckseleinrichtung der Erntemaschine reversiert wird, und in dem die Hydropumpe und der Hydromotor nicht anzutreiben sind. Im dritten Betriebsmodus wird die Kupplung geöffnet und anstelle der Hydropumpe ein Reversiermotor mit ihrer Ausgangsseite verbunden. Der Reversiermotor treibt dann die Häckseleinrichtung mit einer gegenüber dem ersten Betriebsmodus umgekehrten Drehrichtung an und eine Schleifeinrichtung kann auf die Häckseleinrichtung einwirken, um ihre Messer zu schärfen. Durch die wechselweise Ankopplung des Reversiermotors oder der Hydropumpe an die Häckseleinrichtung wird verhindert, dass das jeweils nicht benötigte Element (Reversiermotor oder Hydropumpe) mitdreht, was Energie einspart und verhindert, dass das nicht benötigte Element in die falsche Richtung dreht und beschädigt wird.

Um die umschaltbare Antriebsverbindung zwischen einer mit der Ausgangsseite der Kupplung verbundenen Welle und der Hydropumpe oder dem Reversiermotor herzustellen, findet ein Schaltgetriebe Verwendung.

Dieses Schaltgetriebe umfasst vorzugsweise eine entlang der Welle verschiebbare Schaltmuffe, die wahlweise entweder ein mit der Hydropumpe in Antriebsverbindung stehendes Zahnrad oder ein mit dem Reversiermotor in Verbindung stehendes Zahnrad drehfest mit der Welle koppelt. Die Schaltmuffe wird vorzugsweise durch einen mit der Steuerung angesteuerten, fremdkraftbetätigten Aktor bewegt. Es könnte auch eine Zwischenstellung der Schaltmuffe vorgesehen sein, in der die Welle mit keinem der Zahnräder in Antriebsverbindung steht. Anstelle der Schaltmuffe könnte das Schaltgetriebe auch zwei Kupplungen umfassen, die jeweils zwischen der Welle und der Hydropumpe bzw. dem Reversiermotor positioniert sind.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers,
- Fig. 2: eine schematische Draufsicht auf das Antriebssystem der Erntemaschine,
- Fig. 3: einen horizontalen Schnitt durch das Schaltgetriebe, und
- Fig. 4: einen vertikalen Schnitt durch das Schaltgetriebe.

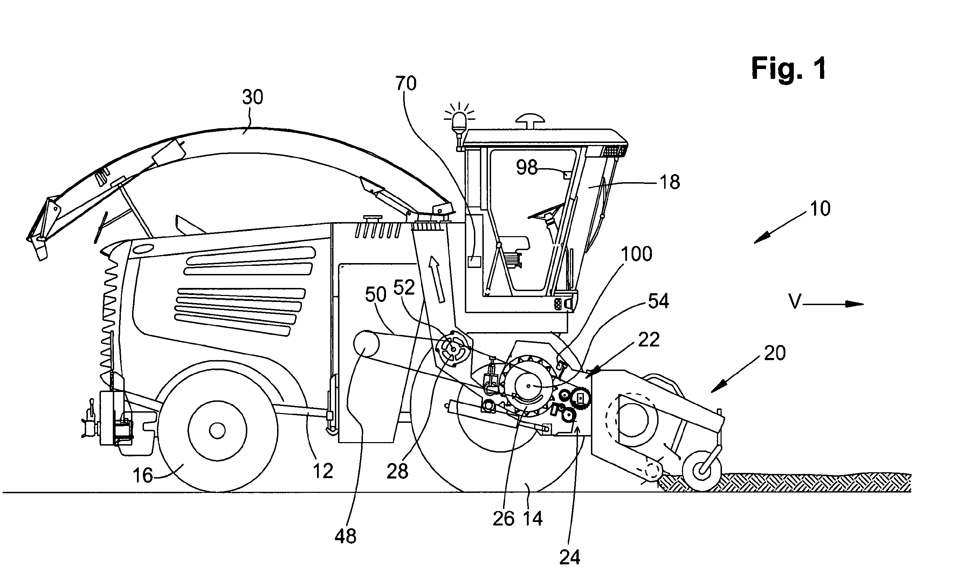

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsrichtung V der Erntemaschine 10, die in der Figur 1 nach rechts verläuft.

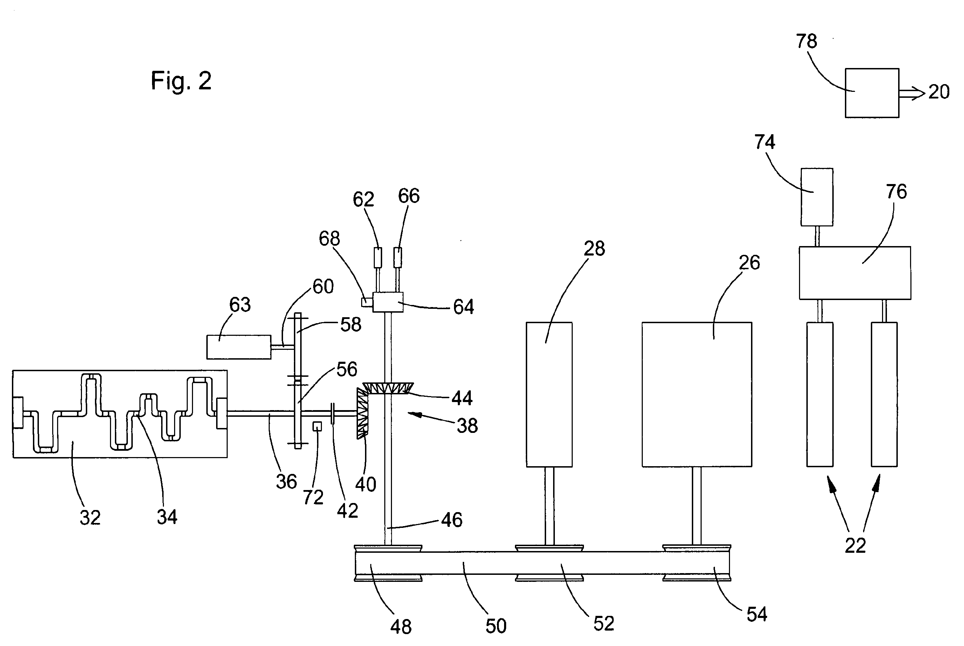

Die Figur 2 zeigt eine Draufsicht auf die Antriebsanordnung der Erntemaschine 10. Im rückwärtigen Bereich der Erntemaschine 10 befindet sich ein Verbrennungsmotor 32 insbesondere in Form eines Dieselmotors, der mit Längsträgern und/oder Querträgern des Rahmens 12 verbunden ist. Der Verbrennungsmotor 32 erstreckt sich in der Vorwärtsrichtung der Erntemaschine 10 bis etwa zum rückwärtigen Ende des Rahmens 12 und umfasst eine Kurbelwelle 34, die sich nach vorn aus dem Gehäuse des Verbrennungsmotors 32 heraus erstreckt. Die Kurbelwelle 34 treibt eine sich horizontal und nach vorn erstreckende Längswelle 36 an. Anders als dargestellt, kann die Erntemaschine 10 auch mehr als einen Verbrennungsmotor 32 aufweisen, so dass die zur Verfügung stehende Antriebsleistung durch Zuschalten eines zweiten Verbrennungsmotors und/oder Umschalten auf einen zweiten, stärkeren Verbrennungsmotor vergrößert werden kann.

Die Längswelle 36 ist an ihrem vorderen Ende mit einem Winkelgetriebe 38 verbunden, das sich aus einem ersten Kegelzahnrad 40, welches über eine Kupplung 42 mit der Längswelle 36 verbunden ist, und aus einem zweiten Kegelzahnrad 44 zusammensetzt, das mit dem ersten Kegelzahnrad 40 kämmt. Die Drehachse des zweiten Kegelzahnrads 44 erstreckt sich horizontal und quer zur Vorwärtsrichtung. Das zweite Kegelzahnrad 44 ist mit einer Welle 46 verbunden, die eine Riemenscheibe 48 antreibt. Die Riemenscheibe 48 wird von einem Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt.

Die Längswelle 36 trägt zwischen der Kupplung 42 und dem Gehäuse des Verbrennungsmotors 32 noch ein am Umfang verzahntes Zahnrad 56, das mit einem weiteren Zahnrad 58 kämmt, welches über eine Längswelle 60 ein Pumpenaggregat 63 antreibt, das zur Versorgung der Hydromotoren zum Antrieb der Räder 14, 16 und eines Reversiermotors 62 dient.

Die Welle 46 steht über ein Schaltgetriebe 64 wahlweise mit dem Reversiermotor 62 oder einer Hydropumpe 66 mit vorzugsweise verstellbarem Schluckvolumen in Antriebsverbindung. Das Schaltgetriebe 64 ist durch einen fremdkraftbetätigten Aktor 68, der insbesondere hydraulisch, pneumatisch oder elektromagnetisch betätigbar ist, mit einer Steuerung 70 verbunden, die auch einen Aktor 72 zur Betätigung der Kupplung 42 kontrolliert. Die Hydropumpe 66 ist hydraulikfluidleitend mit einem Hydromotor 74 verbunden, der ein festes oder verstellbares Schluckvolumen aufweist und über ein Getriebe 76 die Vorpresswalzen des Einzugsförderers 22 antreibt. Alternativ oder zusätzlich ist die Hydropumpe 66 mit einem weiteren Hydromotor 78 hydraulikflüssigkeitsleitend verbunden, der die angetriebenen Elemente des Erntevorsatzes 20 antreibt, bei dem es sich auch um einen Mähvorsatz zur Maisernte handeln könnte. Anstelle des dargestellten, rein hydraulischen Antriebs des Einzugsförderers 22 und des Erntevorsatzes 20 könnten einer oder beide der Hydromotoren 74 und 78 auch in Überlagerung mit einem mechanischen Antrieb von der Häckseleinrichtung 26 her (s. DE 198 12 500 A) den Einzugsförderer 22 und/oder den Erntevorsatz 20 antreiben. Falls einer der Hydromotore 74, 78 nicht von der Hydropumpe 66 her angetrieben wird, wird er zweckmäßigerweise durch eine Pumpe des Pumpenaggregats 63 angetrieben.

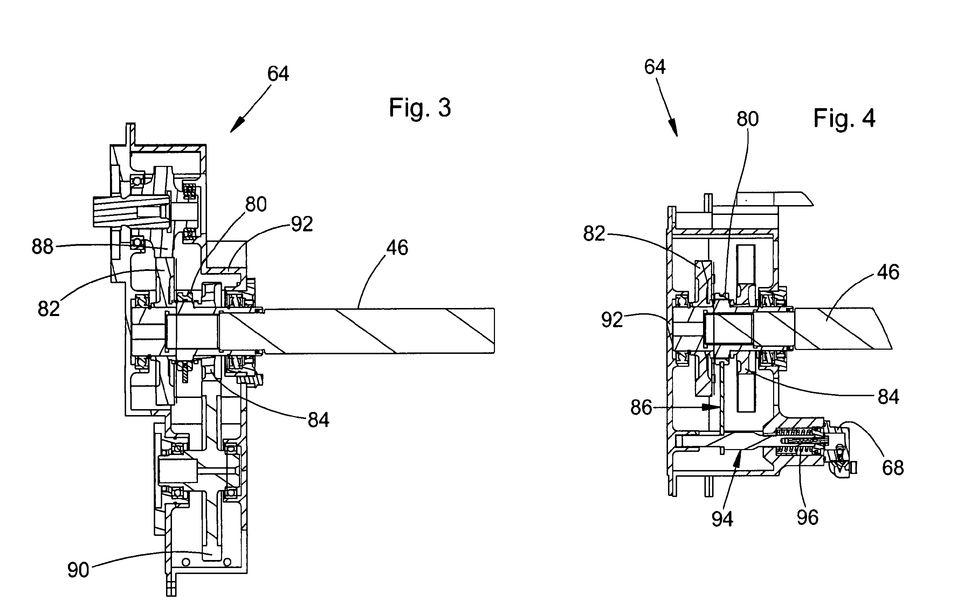

Der Aufbau des Schaltgetriebes 64 geht aus den Figuren 3 und 4 im Einzelnen hervor. Die Welle 46 trägt eine Schaltmuffe 80, die in Längsrichtung der Welle 46 verschiebbar gelagert und gegenüber der Welle 46 drehfest angebracht ist. Koaxial zur Welle 46 sind ein erstes Zahnrad 82 und ein zweites Zahnrad 84 angeordnet. Das erste Zahnrad 82 steht über ein drittes Zahnrad 88 mit der Eingangswelle der Hydropumpe 66 in Antriebsverbindung. Das zweite Zahnrad 84 steht über ein viertes Zahnrad 90 mit der Ausgangswelle des Reversiermotors 62 in Antriebsverbindung.

Wird die Schaltmuffe 80 mittels des Aktors 68, der als Hydraulikzylinder ausgeführt ist und über eine Schaltstange 94 eine die Schaltmuffe 80 verschiebende Schaltgabel 86 bewegen kann, in den Figuren 3 und 4 nach links entlang der Welle 46 verschoben, gerät eine der Schaltmuffe 80 benachbarte Verzahnung des ersten Zahnrads 82 mit einer komplementären Verzahnung der Schaltmuffe 80 in Eingriff, so dass dann das erste Zahnrad 82 drehfest mit der Welle 46 gekoppelt ist. Analog gerät eine der Schaltmuffe 80 benachbarte Verzahnung des zweiten Zahnrads 84 mit einer komplementären Verzahnung der Schaltmuffe 80 in Eingriff, so dass das zweite Zahnrad 84 drehfest mit der Welle gekoppelt ist, wenn der Druck im Aktor 68 abfällt und eine Feder 96 die Schaltstange 94 und die Schaltgabel 86 nach rechts bewegt. Das jeweils nicht mit der Schaltmuffe 80 im Eingriff befindliche Zahnrad 82 oder 84 kann sich frei auf der Welle 46 drehen. Das Schaltgetriebe 64 befindet sich innerhalb eines Gehäuses 92.

Die Steuerung 70 ist mit einer Bedienereingabeeinrichtung 98 verbunden, die es dem Bediener ermöglicht, zumindest die folgenden Betriebsmodi auszuwählen:

Einen ersten Betriebsmodus, der dem Erntebetrieb entspricht, und in dem die Kupplung 42 mittels des Aktors 72 geschlossen und der Aktor 68 mit Druck beaufschlagt ist. In diesem Betriebsmodus treibt der Verbrennungsmotor 32 die Häckseleinrichtung 26 in der in Figur 1 durch den Pfeil gekennzeichneten Richtung und die Fördervorrichtung 28 mechanisch an. Außerdem treibt er über die Welle 46, die Schaltmuffe 80 und die Zahnräder 82, 88 die Hydropumpe 66 an, die wiederum den Hydromotor 74 des Einzugsförderers 22 und/oder den Hydromotor 78 des Erntevorsatzes 20 hydraulisch antreibt. Der Reversiermotor 62 wird nicht hydraulisch angetrieben und ist antriebsmäßig von der Welle 46 abgekoppelt. Die Drehzahlen des Einzugsförderers 22 und/oder des Erntevorsatzes 20 können durch den Bediener in der Kabine oder selbsttätig, insbesondere erntegutabhängig, variiert werden, indem die Taumelscheiben der Hydropumpe 66 und/oder der Hydromotore 74 bzw. 78 verstellt werden.

Ein Reversieren des Einzugsförderers 22 und/oder des Erntevorsatzes 20 ist beispielsweise durch geeignete Einstellungen der Taumelscheiben der Hydromotore 74 und 78 möglich.

Einen zweiten Betriebsmodus, der dem Straßenfahrmodus entspricht, und in dem die Kupplung 42 mittels des Aktors 72 geöffnet ist. Der Aktor 68 befindet sich dann in einer beliebigen Stellung, und der Reversiermotor 62 wird vom Pumpenaggregat 63 her nicht beaufschlagt. Da die Kupplung 42 geöffnet ist, läuft weder die Hydropumpe 66 noch der Reversiermotor 62 mit, was zur Energieeinsparung beiträgt. Die Räder 14 und/oder 16 werden durch Hydromotore (nicht gezeigt) angetrieben, die durch das Pumpenaggregat 63 versorgt werden.

Einen dritten Betriebsmodus, der einem Schleifmodus entspricht, und in dem die Kupplung 42 mittels des Aktors 72 geöffnet und der Aktor 68 nicht beaufschlagt ist. Der Reversiermotor 62 steht dann über die Zahnräder 90 und 84, die Schaltmuffe 80, die Welle 46 und den Treibriemen 50 mit der Häckseleinrichtung 26 in Antriebsverbindung. Er wird durch das Pumpenaggregat 63 versorgt und dreht die Häckseleinrichtung 26 in gegenüber dem ersten Betriebsmodus umgekehrter Richtung, so dass die Messer der Häckseleinrichtung 26 durch eine Schleifeinrichtung 100 geschliffen werden können. Die Hydropumpe 66 ist durch das Schaltgetriebe 64 von der Welle 46 getrennt und muss nicht durch den Reversiermotor 62 mitgedreht werden, was Energie einspart und eine Beschädigung der sonst in falscher Drehrichtung angetriebenen Hydropumpe 66 vermeidet.

## Patentansprüche

1. Erntemaschine (10) in Form eines Feldhäckslers, umfassend:
einen Verbrennungsmotor (32),
eine mit dem Verbrennungsmotor (32) durch einen Antriebsstrang verbindbare Hydropumpe (66),
einen Hydromotor (74, 78), der mit einem Einzugsförderer (22) und/oder einem Erntevorsatz (20) in Antriebsverbindung steht und hydraulikfluidleitend mit der Hydropumpe (66) verbindbar ist, und
eine Steuerung (70), mit der ein erster Betriebsmodus, in dem der Hydromotor (74, 78) angetrieben wird, und ein zweiter Betriebsmodus auswählbar ist, in welchem der Hydromotor (74, 78) nicht angetrieben wird,
wobei der Antriebsstrang zwischen dem Verbrennungsmotor (32) und der Hydropumpe (66) durch eine Kupplung (42), welche durch einen mit der Steuerung (70) verbundenen Aktor (72) betätigbar ist, schließ- und auftrennbar ist und der Antriebsstrang im ersten Betriebsmodus geschlossen und im zweiten Betriebsmodus geöffnet ist,
eine Eingangsseite der Kupplung (42) mit dem Verbrennungsmotor (32) gekoppelt ist und eine Ausgangsseite der Kupplung (42) mit der Hydropumpe (66) und einer Häckseleinrichtung (26) antriebsverbindbar ist, und
mit der Steuerung (70) ein dritter Betriebsmodus auswählbar ist, in dem die Kupplung (42) geöffnet und die Häckseleinrichtung (62) gegenüber dem ersten Betriebsmodus in umgekehrter Drehrichtung antreibbar und mit einer Schleifeinrichtung (100) in Einwirkung bringbar ist,
**dadurch gekennzeichnet, dass** im dritten Betriebsmodus ein Reversiermotor (62) mit der Ausgangsseite der Kupplung (42) und der Häckseleinrichtung (26) in Antriebsverbindung ist,
und dass ein Schaltgetriebe (64) zwischen einer mit der Ausgangsseite der Kupplung (42) verbundenen Welle (46) und der Hydropumpe (66) und dem Reversiermotor (62) angeordnet ist, welches wahlweise eine Antriebsverbindung zwischen der Welle (46) und der Hydropumpe (66) oder zwischen der Welle (46) und Reversiermotor (62) herstellt.

2. Erntemaschine (10) nach Anspruch 1, **dadurch gekennzeichnet, dass** das Schaltgetriebe (64) eine entlang der Welle (46) verschiebbare Schaltmuffe (80) umfasst, die wahlweise eine Verbindung zwischen der Welle (46) und einem mit der Hydropumpe (66) in Antriebsverbindung stehenden Zahnrad (82) und einem mit dem Reversiermotor (62) in Antriebsverbindung stehenden Zahnrad (84) herstellt.

3. Erntemaschine (10) nach Anspruch 2, **dadurch gekennzeichnet, dass** die Schaltmuffe (80) durch einen mit der Steuerung (70) verbundenen, fremdkraftbetätigten Aktor (68) bewegbar ist.

## Claims

1. Harvester (10) in the form of a forage harvester, comprising:
an internal combustion engine (32),
a hydraulic pump (66) which is connectable to the internal combustion engine (32) by a drive train,
a hydraulic motor (74, 78) which is drive-connected to an intake conveyor (22) and/or to a harvesting attachment (20) and is connectable to the hydraulic pump (66) in a manner conducting hydraulic fluid, and
a controller (70), by way of which a first operating mode, in which the hydraulic motor (74, 78) is driven, and a second operating mode, in which the hydraulic motor (74, 78) is not driven, are selectable,
wherein the drive train between the internal combustion engine (32) and the hydraulic pump (66) can be closed and disconnected by way of a clutch (42) which can be actuated by an actuator (72) connected to the controller (70), and the drive train is closed in the first operating mode and open in the second operating mode,
an input side of the clutch (42) is coupled to the internal combustion engine (32) and an output side of the clutch (42) can be drive-connected to the hydraulic pump (66) and a chopping device (26), and
the controller (70) can be used to select a third operating mode in which the clutch (42) is open and the chopping device (62) can be driven in the opposite direction of rotation compared with the first operating mode and can be brought into action with a grinding device (100),
**characterized in that** in the third operating mode a reversing motor (62) is drive-connected to the output side of the clutch (42) and to the chopping device (26),
and **in that** a gearbox (64) is arranged between a shaft (46), which is connected to the output side of the clutch (42), and the hydraulic pump (66) and the reversing motor (62), said gearbox (64) optionally establishing a drive connection between the shaft (46) and the hydraulic pump (66) or between the shaft (46) and the reversing motor (62).

2. Harvester (10) according to Claim 1, **characterized in that** the gearbox (64) comprises a clutch sleeve (80) which is displaceable along the shaft (46) and optionally establishes a connection between the shaft (46) and a gearwheel (82) drive-connected to the hydraulic pump (66) and a gearwheel (84) drive-connected to the reversing motor (62).

3. Harvester (10) according to Claim 2, **characterized in that** the clutch sleeve (80) is movable by an actuator (68) which is connected to the controller (70) and is actuated by external power.

## Revendications

1. Moissonneuse (10) sous forme d'une faucheuse-hacheuse, comprenant :
un moteur à combustion interne (32),
une pompe hydraulique (66) pouvant être connectée au moteur à combustion interne (32) par une chaîne cinématique,
un moteur hydraulique (74, 78) qui est en liaison d'entraînement avec un transporteur d'amenée (22) et/ou une tête de récolte (20) et qui peut être connecté à la pompe hydraulique (66) de manière à conduire les fluides hydrauliques, et
une commande (70), avec laquelle un premier mode de fonctionnement, dans lequel le moteur hydraulique (74, 78) est entraîné, et un deuxième mode de fonctionnement, dans lequel le moteur hydraulique (74, 78) n'est pas entraîné, peuvent être sélectionnés,
la chaîne cinématique entre le moteur à combustion interne (32) et la pompe hydraulique (66) pouvant être fermée et ouverte par un embrayage (42) qui peut être actionné par un actionneur (72) connecté à la commande (70), et la chaîne cinématique étant fermée dans le premier mode de fonctionnement et
étant ouverte dans le deuxième mode de fonctionnement,
un côté d'entrée de l'embrayage (42) étant accouplé au moteur à combustion interne (32) et un côté de sortie de l'embrayage (42) pouvant être connecté par entraînement à la pompe hydraulique (66) et à un dispositif de hachage (26), et
un troisième mode de fonctionnement pouvant être sélectionné par la commande (70), dans lequel mode de fonctionnement l'embrayage (42) est ouvert et
le dispositif de hachage (62) peut être entraîné dans le sens de rotation inverse par rapport au premier mode de fonctionnement, et peut être amené en interaction avec un dispositif d'affûtage (100),
**caractérisée en ce que** dans le troisième mode de fonctionnement, un moteur d'inversion (62) est en liaison d'entraînement avec le côté de sortie de l'embrayage (42) et le dispositif de hachage (26),
et **en ce qu'**une boîte de vitesses (64) est disposée entre un arbre (46) connecté au côté de sortie de l'embrayage (42) et la pompe hydraulique (66) et le moteur d'inversion (62), laquelle boîte de vitesses crée de manière sélective une liaison d'entraînement entre l'arbre (46) et la pompe hydraulique (66) ou entre l'arbre (46) et le moteur d'inversion (62).

2. Moissonneuse (10) selon la revendication 1, **caractérisée en ce que** la boîte de vitesses (64) comprend un manchon coulissant (80) pouvant coulisser le long de l'arbre (46), lequel établit, de manière sélective, une connexion entre l'arbre (46) et un pignon (82) en liaison d'entraînement avec la pompe hydraulique (66) et un pignon (84) en liaison d'entraînement avec le moteur d'inversion (62).

3. Moissonneuse (10) selon la revendication 2, **caractérisée en ce que** le manchon coulissant (80) peut être déplacé par un actionneur (68), actionné par une force extérieure, connecté à la commande (70).
